# EUROPEAN PATENT APPLICATION

(11) **EP 1 416 552 A2**
(43) Date of publication of application: **06.05.2004**
(21) Application number: 03024989.0
(22) Date of filing: 30.10.2003
(51) Int. Cl.: H01M 2/16

(54) **Explosion-proof separator for li-ion secondary batteries**

(30) Priority: 01.11.2002 US 286544; 22.07.2003 US 624277
(71) Applicant: Celgard Inc., Charlotte, South Carolina 28273 (US)
(72) Inventor: Zhang, Zhengming, Charlotte North Carolina 28270 (US); Simmons, Donald K., Charlotte North Carolina 28204 (US); Chambers, Kevin D., Fort Mill South Carolina 29708 (US); Arora, Pankaj, Charlotte North Carolina 28262 (US)
(74) Representative: Schweitzer, Klaus, Dr.

(57) **Abstract**

A battery separator for a lithium-ion secondary battery is a microporous membrane with an adjuvant. The microporous membrane is made of a thermoplastic, and has a thickness of 25 µm or less. The adjuvant, in an effective amount, is mixed into the membrane or coated thereon. The adjuvant is a material adapted to reduce or eliminate energy concentrations around the separator. The energy concentration is sufficient to initiate a reaction of the components of the lithium ion secondary battery.

## Description

The instant invention is a battery separator for a lithium ion (Li-ion) secondary battery.

A Li-ion secondary battery is a cylindrical or prismatic battery having a rigid (e.g., metallic) can and a liquid electrolyte. Today, these types of batteries are used in portable phones, computers, video cameras, still cameras, and are used in larger systems, such as automobiles.

Such batteries are subject to a phenomenon known as "thermal runaway." Thermal runaway is the unwanted and uncontrolled generation of heat within the battery. Thermal runaway in a battery most often leads to battery failure. Thermal runaway in a battery contained within rigid can, if unchecked, can, in limited instances, lead to can rupture and catastrophic failure of the battery; that is an explosion or fire.

Upon closer examination of the thermal runaway phenomenon, it can be categorized into two areas: sudden (or rapid) thermal runaway, and delayed thermal runaway. These two types of runaway are differentiated by the rate of heat generation. In the sudden thermal runaway situation, the maximum temperature is obtained in less than about 1-3 seconds. In the delayed thermal runaway situation, the maximum temperature is obtained in a longer period of time, for example, in greater than 30 seconds. These runaway phenomenons are observed in nail penetration tests, bar crush tests, cycling tests, and external shorting tests. A localized heat increase due to non-uniform current or due to some highly reactive species can quickly initiate sudden thermal runaway reactions. A more uniform distribution of current and heat will require longer times to reach the high temperatures needed for delayed thermal runaway. In general, but not always, sudden thermal runaway is most often seen with internal shorting tests (e.g., nail penetration and bar crush tests), while delayed thermal runaway is most often seen with the external shorting tests. In general, but not always, sudden thermal runaway is most closely associated with catastrophic failure of the battery.

Currently, Li-ion secondary batteries have several features which are intended to guard against the thermal runaway phenomenon. None of these features provide an absolute defense against thermal runaway, but they do limit its occurrence. Those features include: a rupture valve on the can, Current Interrupt Device (CID), Pressure Temperature Coefficient device (PTC), electronic circuitry, and shutdown separators. CID is usually pressure activated on overcharge and permanently opens the electrical connection. PTC is usually built into the header of a cylindrical cell. It is used to limit currents in an overcharge condition (tripped by heat) and to limit short circuit currents from a single cell to a safe level. The shutdown separator is typically a microporous membrane that is sandwiched between the anode and the cathode and that contains the electrolyte, the liquid by which ions are conducted between the electrodes. These separators are designed to "shut down," i.e., stop, or significantly reduce ion flow between the electrodes prior to reaching the maximum temperature, and thereby arrest the thermal runaway.

Shutdown separators designed to obtain the foregoing operating objective are typically constructed from polyethylene (PE). PE is the material of choice because its melting temperature (about 130°C) is below the ignition temperature of Li (about 160°C). Moreover, these separators are either single layered or multilayered (e.g., tri-layer) structures. In the tri-layered structure, the inner layer is most often the PE layer. In operation, as the temperature within the battery increases and reaches the melting temperature of PE layer, the PE melts closing the pores and causing the ionic resistivity of the separator to increase, but the separator retains sufficient structural integrity to keep the electrodes from coming into contact. This operation has worked very well to reduce the adverse consequences arising from the delayed thermal runaway; but this operation has not worked as well against the sudden thermal runaway.

Further study of the sudden thermal runaway phenomenon has led to the following hypotheses: 1) an electric spark (e.g., ionizing materials) is created and jumps between the electrodes when they are brought close together; and 2) a localized hot spot is created. The spark and/or the hot spot are of sufficient energy density to initiate a reaction between the materials of the battery (e.g., lithiated carbon of the anode, the transition metal oxides (e.g., LiₓCoO₂, LiₓNiO₂, LiₓMn₂O₄) of the cathode, the organic liquid of the electrolyte, and the polyolefins of the separator). Once the reaction starts, evolution of heat is rapid.

Accordingly, there is a need for new battery separators for Li-ion batteries that reduce or eliminate the adverse consequences of thermal runaway, particularly the phenomenon of sudden thermal runaway.

U.S. Patent 6,171,689 discloses a flame retardant microporous material that is useful in clothing, wall or roof barriers, optical films in optical devices (such as light reflective and dispersive films), printing substrates, and electrical insulations. However, the disclosed membranes, having a minimum thickness of 33 µm, are too thick to be suitable separators for Li-ion secondary batteries.

Thus, it was an object of the present invention to provide a battery separator for lithium ion secondary batteries which separator is adapted to reduce or eliminate energy concentrations around the separator, said energy concentrations being sufficient to initiate a reaction between components of said lithium ion secondary battery.

The present invention provides such a battery separator for a lithium-ion secondary battery which comprises:
a microporous membrane, said membrane having a thickness of 25 µm or less, said membrane being made of a thermoplastic, and
an effective amount of an adjuvant adapted to reduce or eliminate energy concentrations around the separator, said energy concentrations being sufficient to initiate a reaction between components of said lithium ion secondary battery, said adjuvant being mixed into said membrane or coated thereon.

The battery separator for a lithium-ion secondary battery according to the invention is a microporous membrane with an adjuvant. The microporous membrane is made of a thermoplastic, and has a thickness of 25 µm or less. The adjuvant, in an effective amount, is mixed into the membrane or coated thereon. The adjuvant is a material adapted to reduce or eliminate energy concentrations around the separator. The energy concentration is sufficient to initiate a reaction between the components of the lithium ion secondary battery.

A lithium ion secondary battery is a cylindrical or prismatic battery composed of anode, cathode, separator, and electrolyte, which is packaged in a rigid (e.g., metallic) can or flexible foil.

The battery separator for a lithium-ion secondary batteries according to the invention is a microporous membrane with an adjuvant. The microporous membrane is a thermoplastic membrane film. The thermoplastics include, but are not limited to, polyvinyl chlorides, nylons, fluorocarbons, polyolefins, and polyesters. Polyolefins include, but are not limited to, polyethylenes, polypropylenes, polybutylenes, and polymethyl pentenes. Most preferably, the polyolefin is polyethylene or copolymers of polyethylene (including ultrahigh molecular weight polyethylene). The adjuvant, in an effective amount, is mixed into the separator or coated thereon. The adjuvant is a material adapted to reduce or eliminate energy concentrations around the separator. The energy concentration is sufficient to initiate a reaction between the components of the lithium ion secondary battery.

The foregoing separator may be embodied in several different ways. They include:
- a self-quenching or fire retardant separator;
- a conductive separator; and
- a self-extinguishing separator.
   Each of these will be discussed in further detail below. But, in each a conventional Li-ion separator, i.e., a microporous membrane, has an adjuvant either mixed into, e.g., physically blended with the polymer, or chemically grafted onto the polymer, or coated onto the membrane.

Such microporous membranes are well known and commercially available from Celgard Inc. of Charlotte, North Carolina, USA (CELGARD® membranes, single layer and tri-layer membranes); Tonen Chemical Co. of Tokyo, Japan; Asahi Kasei of Tokyo, Japan (HIPORE™), and Ube Industries of Tokyo, Japan (U-PORE™). These membranes may be made by the "dry-stretch" (or Celgard) process or the "wet" (or phase inversion) process, or by a particle stretch process. The aforementioned microporous membranes possess a thickness of 25 µm or less; porosity range of 30% to 60%; and pore size range of (0.02 µm × 0.08 µm) to (0.2 µm × 1.5 µm).

### The self-quenching or fire retardant separator

The self-quenching or fire retardant separator according to the invention operates on a principle where initiation of a reaction is suppressed. For example, if a spark is formed, the adjuvant reacts to the spark by quenching the spark or retarding its ability to ignite surrounding materials. Several adjuvants may be used to form this separator. They include, for example, phosphates, halogenated compounds (such as halogenated polyethylene wax), and newer non-halogenated, non-phosphate fire retardants, such as triazine derivatives. Useful flame retardant additives further include halogenated compounds, organic phosphorus-containing compounds (such as organic phosphates), inorganic compounds, and inherently flame retardant polymers.

Halogenated organic flame retardant additives are thought to function by chemical interaction with the flame: the additive dissociates into radical species that compete with chain propagating and branching steps in the combustion process. Useful halogenated additives are described, for example, in the Kirk-Othmer Encyclopedia of Technology, 4th Ed., vol. 10, pp 954-76, John Wiley & Sons, N.Y., N.Y., 1993.

Included within the scope of halogenated organic flame retardant additives are substituted benzenes exemplified by tetrabrombenzene, hexachlorobenzene, hexabromobenzene, and biphenyls such as 2,2'-dichlorobiphenyl, 2,4'-dibromobiphenyl, 2,4'-dichlorobiphenyl, hexabromobiphenyl, octabromobiphenyl, decabromobiphenyl and halogenated diphenyl ethers, containing 2 to 10 halogen atoms.

The halogenated organic flame retardant additives for this invention are aromatic halogen compounds such as brominated benzene, chlorinated biphenyl, or a compound comprising two phenyl radicals separated by a divalent linking group (such as a covalent bond or aklylene group) and having at least two chlorine or bromine atoms per phenyl nucleus, chlorine containing aromatic polycarbonates, and mixtures of at least two of the foregoing. Especially preferred are decabromodiphenyl oxide, pentabromodiphenyl oxide, and octabromodiphenyl oxide.

Among the useful organic phosphorus additives are organic phosphorus compounds, phosphorus-nitrogen compounds and halogenated organic phosphorus compounds. Often organic phosphorus compounds function as flame retardants by forming protective liquid or char barriers, which minimize transpiration of polymer degradation products to the flame and/or act as an insulating barrier to minimize heat transfer.

In general, the preferred phosphate compounds are selected from organic phosphonic acids, phosphonates, phosphinates, phosphonites, phosphinites, phosphine oxides, phosphines, phosphites or phosphates. Illustrative is triphenyl phosphine oxide. These can be used alone or mixed with hexabromobenzene or a chlorinated biphenyl and, optionally, antimony oxide. Phosphorus-containing flame retardant additives are described, for example, in Kirk-Othmer (supra) pp. 976-98.

Typical of the preferred phosphorus compounds to be employed in this invention would be those having the general formula 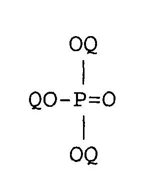 and nitrogen analogs thereof where each Q represents the same or different radicals including hydrocarbon radicals such as alkyl, cycloalkyl, aryl, alkyl substituted aryl and aryl substituted alkyl; halogen, hydrogen and combinations thereof provided that at least one of said Q's is aryl. Typical examples of suitable phosphates include, phenylbisdodecyl phosphate, phenylbisneopentyl phosphate, phenylethylene hydrogen phosphate, phenyl-bis-3,5,5'-trimethylhexyl phosphate), ethyldiphenyl phosphate, 2-ethylhexyl di(p-tolyl) phosphate, diphenyl hydrogen phosphate, bis(2-ethylhexyl) p-tolylphosphate, tritolyl phosphate, bis(2-ethylhexyl)-phenyl phosphate, tri(nonylphenyl) phosphate, phenylmethyl hydrogen phosphate, di(dodecyl) p-tolyl phosphate, tricresyl phosphate, triphenyl phosphate, halogenated triphenyl phosphate, dibutylphenyl phosphate, 2-chloroethyldiphenyl phosphate, p-tolyl bis(2,5,5'-trimethylhexyl) phosphate, 2-ethylhexyldiphenyl phosphate, diphenyl hydrogen phosphate, and the like. The preferred phosphates are those where each Q is aryl. The most preferred phosphate is triphenyl phosphate. It is also preferred to use triphenyl phosphate in combination with hexabromobenzene and, optionally, antimony oxide.

Also suitable as flame-retardant additives for this invention are compounds contianing phosphorus-nitrogen bonds, such as phosphonitrilic chloride, phosphorous ester amides, phosphoric acid amides, phosphonic acid amides or phosphinic acid amides.

Among the useful inorganic flame retardant additives include compounds of antimony, such as include antimony trioxide, antimony pentoxide, and sodium antimonate; boron, such as barium metaborate, boric acid, sodium borate and zinc borate; aluminum, such as aluminum trihydrate; magnesium, such as magnesium hydroxidel; molybdenum, such as molybdic oxide, ammonium molybdate and zinc molybdate, phosphorus, such as phosphoric acid; and tin, such as zinc stannate. The mode of action is often varied and may include inert gas dilution, (by liberating water for example), and thermal quenching (by endothermic degradation of the additive). Useful inorganic additives are described for example in Kirk-Othmer (supra), pp 936-54.

Phosphates, which are known fire retardants, may be thinly coated on the surface of the membrane or mixed with the polymer forming the membrane. One such phosphate is triphenyl phosphate. One such triphenyl phosphate is a substituted triaryl phosphate ester commercially available under the trade name PHOSFLEX® flame retardant plasticizer from Akzo-Nobel, Dobbs Ferry, New York, USA. Preferably, the phosphate comprises 1-60% weight of the membrane, most preferred 1-20% weight. For example, the phosphate was coated onto the exterior surface of a microporous polyethylene membrane.

Halogenated polyethylene waxes or paraffins may be blended into the resin forming the microporous membrane, coated onto a surface of the membrane, or sandwiched between two membranes. Preferably, the halogenated wax comprises 2-20% by weight of the membrane. The preferred halogenated wax is chlorinated polyethylene wax. Chlorinated polyethylene waxes are commercially available under the trade name TYRIN® from Dupont-Dow Elastomers LLC of Wilmington, Delaware, USA. For example, a blend of chlorinated polyethylene wax and polyethylene resin at 2% by weight wax forms a layer between two microporous polypropylene membranes. In another example, a microporous polyethylene membrane containing polyvinylidene fluoride (PVDF) is coated with chlorinated polyethylene wax.

The newer non-halogenated, non-phosphate fire retardants, such as triazine derivatives, may be blended into the resin forming the microporous membrane, coated onto a surface of the membrane, or sandwiched between two membranes. One such triazine derivative is FLAMESTAB® commercially available from Ciba Specialty Chemical Corporation, Basel, Switzerland. Preferably, the triazine derivative comprises about 0.5-10% weight of the membrane, most preferred about 1-3% weight.

### The conductive separator

The conductive separator according to the invention operates on a principle where energy is conducted away so that no energy concentration great enough to initiate a reaction is allowed to arise. Energy referred to here means electrical energy, thermal energy, or both. For example, if a spark is formed, the adjuvant rapidly distributes the energy away so that no concentration points arise. Several adjuvants may be used to form this separator. They include, for example, inorganic materials (e.g., metals, ceramics, or semiconductors), carbon black, and organic materials. The inorganic materials may be either electrically conductive, electrically semiconductive, thermally conductive, or a combination thereof. Carbon black can be both electrically and thermally conductive. The organic materials are typically electrically conductive. The inorganic materials include, but are not limited to, Al₂O₃, SiO₂, and TiO₂. The organic materials include, but are not limited to, polyaniline and polyacetylene. These materials may be used separately or in combination.

The inorganic materials and carbon black may be blended into the resin forming the microporous membrane, coated onto a surface of the membrane, or sandwiched between two membranes. These materials may comprise 1-40% weight of the membrane, preferably 1-20% weight and most preferably 1-10% weight. For example, 2% weight TiO₂ can be blended with a polyethylene resin that was subsequently formed into a layer between two microporous polypropylene membranes. In another example, 30% weight carbon black is dispersed into PVDF that was subsequently formed into a layer sandwiched between microporous polypropylene membranes.

The organic materials may be blended into the resin forming the microporous membrane, coated onto a surface of the membrane, or sandwiched between two membranes. The materials include polyaniline and polyacetylene. These materials are preferably doped or chemically modified with an acid to enhance their conductivity. One such material is ORMELON®, a polyaniline commercially available from Zipperling Kessler & Co. of Ammersbek, Germany. For example, a dispersion of 0.5% weight polyaniline was coated onto a membrane.

### The self-extinguishing separator

The self-extinguishing separator according to the invention operates on a principle where a spark causes the adjuvant to decompose and forms a gas that blows electrolyte (containing, for example, ethylene carbonate (EC) or propylene carbonate (PC)) away from the energy concentration and thereby prevents initiation of a reaction. Several adjuvants may be used to form this separator. They include, for example, gassing agents. Gassing agents include, for example, tetrazole-based compounds and semicarbazide-based compounds. These materials may be blended into the resins forming the microporous membrane, coated onto a surface of the membrane, or sandwiched between two membranes. These materials may comprise 1-40% weight of the membrane, preferably 10-30% of the membrane. One such tetrazole-based compound is 5-phenyltetrazole (5-PT) commercially available as EXPANDEX from Uniroyal Chemical Co. of Naugatuck, Connecticut, USA. One such semicarbazide-based compound is p-toluenesulfonyl semicarbazide (TSSC) commercially available as CELOGEN from Uniroyal Chemical Co. of Naugatuck, Connecticut, USA. For example, the 5-PT was mixed with PVDF to form a sandwiched layer between two microporous polypropylene layers.

## Claims

1. A battery separator for a lithium-ion secondary battery comprises:
a microporous membrane, said membrane having a thickness of 25 µm or less, said membrane being made of a thermoplastic, and
an effective amount of an adjuvant adapted to reduce or eliminate energy concentrations around the separator, said energy concentrations being sufficient to initiate a reaction between components of said lithium ion secondary battery, said adjuvant being mixed into said membrane or coated thereon.

2. The battery separator of Claim 1 wherein said thermoplastic being polyethylene or copolymers of polyethylene.

3. The battery separator of Claim 1 or 2, wherein said lithium ion secondary battery components being selected from the group consisting of anode materials, cathode materials, electrolytes, and separators.

4. The battery separator of Claim 1, 2 or 3, wherein said adjuvant being adapted to quench or to retard said energy's ability to initiate a reaction between said lithium ion secondary battery components.

5. The battery separator of Claim 4 wherein said adjuvant being selected from the group consisting of: phosphates, halogenated polyethylene wax, triazine derivatives, and combinations thereof.

6. The battery separator of Claim 5 wherein said phosphate comprises a triphenyl phosphate.

7. The battery separator of Claim 6 wherein said triphenyl phosphate being 1-60% by weight of the membrane.

8. The battery separator of Claim 5 wherein said halogenated polyethylene wax comprises between 2-20% by weight of said membrane.

9. The battery separator of Claim 5 wherein said triazine derivative comprises between 0.5-10% by weight of said membrane.

10. The battery separator of Claim 1, 2 or 3, wherein said adjuvant being adapted to conduct away said energy.

11. The battery separator of Claim 10 wherein said adjuvant being selected from the group consisting of inorganic materials, carbon black, organic materials, and combinations thereof.

12. The battery separator of Claim 11 wherein said inorganic materials being selected from the group consisting of Al₂O₃, SiO₂, TiO₂, and combinations thereof.

13. The battery separator of Claim 11 wherein said inorganic material comprises 1-40% by weight of said membrane.

14. The battery separator of Claim 11 wherein said carbon black comprises 1-40% by weight of said membrane.

15. The battery separator of Claim 11 wherein said organic material being selected from the group consisting of polyaniline, polyacetylene, and combinations thereof.

16. The battery separator of Claim 1, 2 or 3, wherein said adjuvant being adapted to decompose to a gas under the influence of energy.

17. The battery separator of Claim 16 wherein said adjuvant being selected from the group consisting of tetrazole-based compounds, semicarbazide-based compounds, and combinations thereof.

18. The battery separator of Claim 17 wherein said adjuvant comprises 1-40% by weight of said membrane.

19. The battery separator of Claim 17 wherein said adjuvant comprises 10-30% by weight of said membrane.

20. The battery separator of Claim 17, 18 or 19 wherein said tetrazole-based compound being 5-phenyl tetrazole.

21. The battery separator of Claim 17 wherein said semicarbazide-based compound being p-toluenesulfonyl semicarbazide.

22. A lithium ion battery having the separator according to claim 1.

23. Use of a separator according to Claim 1 for the manufacture of batteries.

24. Use of Claim 23, wherein the battery is a lithium ion battery.
